# EUROPEAN PATENT SPECIFICATION

(11) **EP 2 151 468 B1**
(45) Date of publication and mention of the grant of the patent: **29.11.2017**
(21) Application number: 08740797.9
(22) Date of filing: 23.04.2008
(51) Int. Cl.: C08J 5/18, B32B 27/36, C01G 41/00, C01G 41/02, C08K 3/22, C08L 67/00, B32B 27/08, B32B 27/18, B32B 27/20, B82Y 30/00, C09C 1/00

(54) **HOT RADIATION SHIELDING POLYESTER FILM, AND HOT RADIATION SHIELDING POLYESTER FILM LAMINATE**
HEISSE STRAHLUNG ABSCHIRMENDE POLYESTERFOLIE UND LAMINAT VON HEISSE STRAHLUNG ABSCHIRMENDER POLYESTERFOLIE
PELLICULE DE POLYESTER PROTÉGEANT DES RAYONNEMENTS CHAUDS, ET STRATIFIÉ COMPORTANT DES PELLICULES DE POLYESTER PROTÉGEANT DES RAYONNEMENTS CHAUDS

(30) Priority: 26.04.2007 JP 2007117594
(43) Date of publication of application: 10.02.2010
(73) Proprietor: Sumitomo Metal Mining Co., Ltd., Tokyo 105-8716 (JP)
(72) Inventor: FUJITA, Kenichi, Ichikawa-shi Chiba 272-0835 (JP)
(74) Representative: Günther, René
(86) International application number: PCT/JP2008/057870
(87) International publication number: WO 2008/136328

(56) References cited:
- EP-A1- 1 676 890
- WO-A1-2008/078833
- JP-A- 2004 059 875
- JP-A- 2006 001 568
- JP-A- 2006 132 042
- JP-A- 2006 219 662
- DATABASE WPI Week 200680 Thomson Scientific, London, GB; AN 2006-785815 XP002669020, & JP 2006 282736 A (SUMITOMO METAL MINING CO) 19 October 2006 (2006-10-19)

## Description

### BACKGROUND

### Technical Field

The present invention relates to a heat-ray shielding polyester film utilized in an opening part such as windows of buildings or vehicles, and having an excellent visible light transmittance and heat ray-shielding properties, and relates to a heat ray-shielding polyester film laminate in which the heat ray-shielding polyester film is laminated on other transparent base material.

### Description of Related Art

Conventionally, a so-called opening part such as windows of each buildings and vehicles is made of a transparent glass plate or a resin plate, for taking in solar rays. However, the solar rays include ultraviolet rays and infrared rays in addition to visible light. A near infrared ray having wavelengths of 800 to 2500nm out of the infrared rays included in the solar rays, is called a heat ray and this heat ray causes a temperature in a room to increase when it enters into the room from the opening part.

Therefore, in recent years, a heat ray-shielding material capable of shielding heat rays while sufficiently taking in the visible light, and simultaneously suppressing a temperature increase in a room while maintaining brightness, has been studied, and various means therefore have been proposed.

For example, patent document 1 proposes a heat ray-shielding plate, wherein a heat ray reflection film formed by vapor-depositing a metal on a transparent resin film, is bonded to a transparent base material such as a glass plate, an acrylic plate, and a polycarbonate plate. Also, for example, a plurality of heat ray shielding plates formed by directly vapor-depositing the metal or metal oxide on the surface of the transparent base material are proposed.

As a heat ray-shielding means, patent document 2 and patent document 3 propose the heat ray-shielding plate formed by kneading mica coated with titanium oxide as a heat ray-reflection particle, into transparent resin such as acrylic resin and polycarbonate resin, other than a method for applying a heat ray-reflecting film and a heat ray-shielding film on the aforementioned transparent base material.

Meanwhile, in patent document 4, an applicant of the present invention focuses on hexaboride nanoparticles having a large quantity of free electrons as components having a heat ray-shielding effect, and has already proposed the heat ray-shielding resin sheet material wherein the hexaboride nanoparticles are dispersed, or the hexaboride nanoparticles and ITO nanoparticles and/or ATO nanoparticles are dispersed in the polycarbonate resin and the acrylic resin.

In optical characteristics of the heat ray-shielding resin sheet material to which the hexaboride nanoparticles are singularly applied, or the hexaboride nanoparticles and ITO nanoparticles and/or ATO nanoparticles are applied, a visible light transmittance is improved to 70% or more and a solar light transmittance is improved to 50%, because the heat ray-shielding resin sheet material has a maximum transmittance in a visible ray region, and exhibits a strong absorption and hence a minimum transmittance in a near-infrared region.

Patent document 1:
   Japanese Patent Laid Open Publication No.61-277437
Patent document 2:
   Japanese Patent Laid Open Publication No.05-78544
Patent document 3:
   Japanese Patent Laid Open Publication No.02-173060
Patent document 4:
   Japanese Patent Laid Open Publication No.2003-327717

The document EP 1 676 890 A1 relates to providing an infrared-shielding body sufficiently transmitting visible rays, having no half-mirror shaped appearance, requiring no large-scale apparatus when forming a film on a substrate, efficiently shutting invisible near-infrared rays with wavelength range of 780nm or more, while eliminating a heat treatment at high temperature after film formation, and having a spectral characteristic such as transparency with no change of color tone. The starting material, which is a mixture containing a predetermined amount of a tungsten compound, is heated at 550°C in a reductive atmosphere for 1 hour, then cooled to room temperature once in an argon atmosphere, thus producing powder of W 18 O 49 . Then, the powder, the solvent, and the dispersant are mixed, then subjected to dispersion treatment to obtain a dispersion solution. The dispersion solution and a UV-curable hardcoat resin are mixed to obtain a solution of fine particle dispersion of infrared-shielding material. The solution of the fine particle dispersion of infrared-shielding material is applied on a PET resin film to form a film, which is then cured, and an infrared-shielding film having a transmission profile shown in the figure is thereby obtained.

Further, the document
DATABASE WPI
Week 200680
Thomson Scientific, London, GB;
AN 2006-785815
XP002669020,
& JP 2006 282736 A (SUMITOMO METAL MINING CO) 19 October 2006 (2006-10-19)
describes an infrared-shielding material particulate dispersion liquid which is obtained by dispersing tungstic acid compound microparticles and/or oxide expressed by composite tungstic acid compound microparticles, and a hindered amine-based light stabilizer in an amount of 0.01-20% in a medium.

### Disclosure of the Invention

### Problems to be solved by the Invention

In a heat ray-shielding plate, with a heat ray-reflecting film bonded to a transparent substrate described in patent document 1, there is a problem that the heat ray-reflecting film itself incurs extremely high cost and also a complicated step such as a bonding step is required, thereby increasing a cost extremely high. Further, bonding properties between the transparent base material and the heat ray-reflecting film are inferior, thus involving a problem that the heat ray-reflecting film is peeled-off.

In the heat ray-shielding plate, with the heat ray-shielding film vapor-deposited on the transparent base material, a vapor deposition apparatus requiring an atmosphere control controlling the atmosphere to be in a high vacuum state with high precision must be used. Therefore, there is a problem that mass-productivity is low, universal usability is poor, and the heat ray-shielding plate is extremely expensive.

In the heat ray-shielding plate described in patent documents 2 and 3, in order to obtain a high heat ray-shielding properties, a large quantity of heat ray-reflecting particles are required to be added thereto. However, when an addition amount of the heat ray-reflecting particles are increased, there is a problem that the visible light transmittance is lowered this time. Reversely, when the addition amount of the heat ray-reflecting particles is reduced, it is difficult to simultaneously satisfy the heat ray-shielding properties and the visible light transmittance, because the heat ray-shielding properties are lowered in spite of increased visible light transmittance. Further, when a large quantity of heat ray reflection particles are mixed, there is also a problem from an aspect of strength, such that physical property of the transparent resin, being the base material, is deteriorated, and particularly impact resistance and toughness are deteriorated.

In a heat ray-shielding sheet material described in patent document 4, a sufficient solar light-shielding effect can be obtained in a region of a low visible light transmittance. However, the sufficient solar light transmittance can not be obtained in a region of a high visible light transmittance, and there is a room for improvement in this point.

In view of the above-described circumstance, an object of the present invention is to provide a heat ray-shielding film and a heat ray-shielding film laminate, which can be manufactured by a simple method without using a complicated process and a physical film deposition method at a high cost, and capable of maintaining excellent visible light transmittance and simultaneously exhibiting high heat ray-shielding properties.

### Means for solving the problem

The invention is defined in independent claim 1.

In order to solve the above-described problem, as a result of a strenuous study continued by inventors of the present invention, it is found that the above-described problems can be solved by applying tungsten oxide nanoparticles expressed by a general formula WOₓ (satisfying 2.45 ≤ x ≤ 2. 999) and/or composite tungsten oxide nanoparticles expressed by a general formula M_{y}WO_{z} (satisfying 0.1 ≤ y ≤ 0.5, 2.2 ≤ z ≤ 3.0) and having a hexagonal crystal structure, as nanoparticles having a heat ray-shielding function.

Further, it is also found by the inventors of the present invention, that polyester used as a film material affixed to windows of vehicles and buildings, is suitable, for the reason that polyester has a high transparency and mechanical characteristics, as the film material of the aforementioned heat ray-shielding film and the heat ray-shielding film laminate.

Namely, in order to solve the above-described problems, in a first structure, there is provided a heat ray-shielding polyester film, with nanoparticles having a heat ray-shielding function dispersed therein, wherein the nanoparticles having the heat ray-shielding function are tungsten oxide nanoparticles expressed by a general formula WOₓ (satisfying 2.45 ≤ x ≤ 2 . 999) and/or composite tungsten oxide nanoparticles expressed by a general formula M_{y}WO_{z} (satisfying 0.1 ≤ y ≤ 0.5, 2.2 ≤ z ≤ 3.0) and having a hexagonal crystal structure, and an average dispersed particle size of the nanoparticles is 1nm or more and 200nm or less, a content of the nanoparticles is 0.1wt% or more and 10wt% or less, and a thickness of the polyester film is 10µm or more and 300µm or less.

In a second structure, there is provided the heat ray-shielding polyester film according to the first structure, wherein M contained in the composite tungsten oxide nanoparticles is one or more kinds of elements selected from Cs, Rb, K, Tl, In, Ba, Li, Ca, Sr, Fe, Sn, Al, and Cu.

Here, according to a study by the inventors of the present invention, in a case of the heat ray-shielding polyester film, with the tungsten oxide and composite tungsten oxide nanoparticles dispersed in a medium, which are transparent in a visible light region and having an absorption in a near infrared ray region, it is found that color tone is changed and a transmittance is lowered, when subjected to ultraviolet rays for a long time .

Then, as a result of a research by the inventors of the present invention, it is possible to achieve a structure of containing a coloring preventing agent, together with the aforementioned tungsten oxide and composite tungsten oxide nanoparticles. Specifically, it is found that the heat ray-shielding polyester film, with a change of color by ultraviolet rays suppressed, can be obtained by containing and dispersing one or more kinds of coloring preventing agents selected from a phosphate-based coloring preventing agent, an amide-based coloring preventing agent, an amine-based coloring preventing agent, a hindered amine-based coloring preventing agent, a hindered phenol-based coloring preventing agent, and a sulfur-based coloring preventing agent, and the aforementioned change of color can be solved.

Namely, in order to solve the aforementioned problems, in a third structure, there is provided the heat ray-shielding polyester film according to the first or second structure, wherein coloring preventing agents are contained in the polyester film.

In a fourth structure, there is provided the heat ray-shielding polyester film according to the third structure, wherein a content of the coloring preventing agents is 0.1wt% or more and 20wt% or less.

In a fifth structure, there is provided the heat ray-shielding polyester film according to the third or fourth structure, wherein the coloring preventing agents are one or more kinds of coloring preventing agents selected from a phosphorus-based coloring preventing agent, an amide-based coloring preventing agent, an amine-based coloring preventing agent, a hindered amine-based coloring preventing agent, a hindered phenol-based coloring preventing agent, and a sulfur-based coloring preventing agent.

In a sixth structure, there is provided the heat ray-shielding polyester film according to any one of the third to fifth structures, wherein the coloring preventing agent is the phosphate-based coloring anent, containing one or more kinds of groups selected from any one of a phosphonate group, a phosphate group, a phosphonate ester group, and a phosphinate group.

In a seventh structure, there is provided the heat ray-shielding polyester film according to any one of the third to sixth structures, wherein a visible light transmittance of the heat ray-shielding polyester film is set to be 60% or more and 70% or less, and when a reduction rate of the visible light transmittance is standardized as 100% after emitting ultraviolet rays for 2 hours at intensity of 100mW/cm² to a heat ray-shielding polyester film having the same composition with the composition of the aforementioned heat ray-shielding polyester film other than a point that the coloring preventing agent is not contained, the reduction rate of the visible light transmittance is 70% or less after emitting the ultraviolet rays to this heat ray-shielding polyester film, for the same hours, at the same intensity.

In an eighth structure, there is provided a heat ray-shielding polyester film, which is obtained by laminating the heat ray-shielding polyester film according to any one of claims 1 to 7 on other transparent base material.

### Advantage of the Invention

The heat ray-shielding polyester film of the present invention is the heat ray-shielding polyester film containing nanoparticles having a heat ray-shielding function in a transparent polyester film, wherein the nanoparticles having the heat ray-shielding function are constituted of tungsten oxide nanoparticles expressed by a general formula WOₓ (satisfying 2.45 ≤ x ≤ 2.999) and/or composite tungsten oxide nanoparticles expressed by a general formula M_{y}WO_{z} (satisfying 0.1 ≤ y ≤ 0.5, 2.2 ≤ z ≤ 3.0) and having a hexagonal crystal structure, with a diameter of the oxide nanoparticles being 1nm or more and 200nm or less, and a content of the oxide particles being 0.1wt% to 10wt%, and a thickness of the polyester film being 10µm to 300µm. Accordingly, a heat ray-shielding polyester film capable of maintaining an excellent visible light transmittance and exhibiting high heat ray-shielding properties, and a heat ray-shielding polyester film laminate, with the heat ray-shielding polyester film laminated on other resin base material can be obtained, which are useful in such a manner as being used in window materials for vehicles, buildings, and airplanes, being capable of efficiently shield solar rays, and being utilized suitably as inexpensive materials.

### Best Mode for carrying out the Invention

### 1. Nanoparticles having the heat ray-shielding function

Nanoparticles having the heat ray-shielding function applied to this embodiment are tungsten oxide nanoparticles expressed by a general formula WOₓ (satisfying 2.45 ≤ x ≤ 2.999) and/or composite tungsten oxide nanoparticles expressed by a general formula M_{y}WO_{z} (satisfying 0.1 ≤ y ≤ 0.5, 2.2 ≤ z ≤ 3.0) and having a hexagonal crystal structure. By using the aforementioned tungsten oxide nanoparticles and/or the composite tungsten oxide nanoparticles, desired optical characteristics can be obtained as the heat ray-shielding polyester film.

For example, W₁₈O₄₉,W₂₀O₅₈, W₄O₁₁ can be give as the tungsten oxide nanoparticles expressed by the general formula WOₓ (satisfying 2.45 ≤ x ≤ 2.999). When a value of x is 2.45 or more, it is possible to avoid a situation that a crystal phase of WO₂, being an outside of a purpose, appears in the heat ray-shielding material, and also it is possible to obtain a chemical stability of the material. Meanwhile, when the value of x is 2.999 or less, a sufficient amount of free electrons are generated and the tungsten oxide nanoparticles become an efficient heat ray-shielding material. When the value of x is 2.95 or less, the tungsten oxide nanoparticles are further preferable as the heat ray-shielding material. Note that WOₓ compound, with a range of x satisfying 2.45 ≤ x ≤ 2.999, is contained in a compound called a so-called a magneli phase.

As the composite tungsten oxide nanoparticles expressed by a general formula M_{y}WO_{z} (satisfying 0.1 ≤ y ≤ 0.5, 2.2 ≤ z ≤ 3.0) and having a hexagonal crystal structure, for example, the composite tungsten oxide nanoparticles containing one or more kinds of elements selected from Cs, Rb, K, Tl, In, Ba, Li, Ca, Sr, Fe, Sn, Al, and Cu can be given. An addition amount y of added element M is preferably 0.1 or more and 0.5 or less, and is further preferably in the vicinity of 0.33. This is because the value theoretically calculated from the hexagonal crystal structure is 0.33, and in a case of an addition amount around this value, preferable optical characteristics can be obtained.

Also, the range of z is preferably set to be 2.2 ≤ z ≤ 3.0. This is because in the composite tungsten oxide material expressed by M_{y}WO_{z} also, a similar mechanism works, which is similar to that of the tungsten oxide material expressed by WOₓ as described above, and also in a range of z ≤ 3.0, there is a supply of the free electrons by addition of the aforementioned element M. From the viewpoint of the optical characteristics, the range of z is more preferably set to be 2.2 ≤ z ≤ 2.99, and further preferably set to be 2.45 ≤ z ≤ 2.99.

Here, as a typical example of the composite tungsten oxide material, CS_{0.33}WO₃, Rb_{0.33}WO₃, K_{0.33}WO₃, Ba_{0.33}WO₃ can be given. However, when the values of y and z are set to be in the aforementioned range, useful heat ray-shielding characteristics can be obtained.

It is preferable that surface treatment is applied to surfaces of the tungsten oxide nanoparticles and the composite tungsten oxide nanoparticles of the present invention in such a manner as being coated with an oxide containing one or more kinds of elements selected from Si, Ti, Zr, and Al, from the viewpoint of improving weatherability.

In addition, in order to obtain a desired heat ray-shielding polyester film, it is desirable that powder colors of the tungsten oxide nanoparticles and/or the composite tungsten oxide nanoparticles satisfy conditions that L* is set to be 25 to 80, a* is set to be -10 to 10, and b* is set to be -15 to 15 in the powder colors of a L*a*b* color system (JIS Z 8729) recommended by Commission internationale de l'eclairage (CIE).

The near infrared ray-shielding material containing the tungsten oxide nanoparticles and/or the composite tungsten oxide nanoparticles of this embodiment absorb light in a near infrared region and particularly the light of 1000nm or more is greatly absorbed. Therefore, its transmission color tone is a bluish color tone in many cases. Further, sizes of the tungsten oxide nanoparticles and composite tungsten oxide nanoparticles can be suitably selected, according to a purpose of use. First, when used for an application of maintaining transparency, the tungsten oxide nanoparticles and the composite tungsten oxide nanoparticles have preferably a dispersed particle size of 200nm or less. This is because when the dispersed particle size is 200nm or less, the light is not completely shielded by scattering, and visibility in a visible light region can be maintained, and simultaneously transparency can be efficiently maintained. Particularly, when the transparency of the visible light region is emphasized, the scattering by particles is further preferably taken into consideration.

When reduction of the scattering by these particles is emphasized, the dispersed particle size of the tungsten oxide nanoparticles and the composite tungsten oxide nanoparticles are preferably set to be 200nm or less. This is because when the dispersed particle size is smaller, scattering of the light in a visible light region of wavelengths 400nm to 780nm is reduced, due to geometrically scattering or Mie scattering, and as a result, a heat ray-shielding film is turned into a fogged glass, and it is possible to avoid a situation that a sharp transparency can not be obtained.

Namely, when the dispersed particle size is 200nm or less, the geometric scattering or the Mie scattering is reduced, and an area becomes a Rayleigh scattering area. In the Rayleigh scattering area, scattered lights are reduced in inverse proportion to 6^{th} power of the particle size, and therefore scattering is reduced with reduction of the dispersed particle size, and the transparency is improved. Further, when the dispersed particle size is 100nm or less, the scattered lights are preferably extremely reduced. The dispersed particle size is preferably smaller, from a viewpoint of avoiding the scattering of the lights, and industrial manufacture is easy when the dispersed particle size is 1nm or more.

The heat ray-shielding performance is determined by a content of the nanoparticles having the heat ray-shielding function and a thickness of the polyester film. Namely, the nanoparticles having the heat ray-shielding function can secure the heat ray-shielding characteristics by increasing the thickness of the film up to, for example, 300µm, when its content is 0.1wt%. Accordingly, as a content capable of exhibiting practical heat ray-shielding characteristics, the content is preferably set to be 0.1wt% or more. Also, when the content of the nanoparticles having the heat ray-shielding function is 10wt% or less, abrasion strength and impact resistance of the polyester film are not decreased. Meanwhile, when the thickness of the film is decreased, required content of the nanoparticles is increased for exhibiting the practical heat ray-shielding characteristics. For example, when the thickness of the film is decreased to 10µm, the required content of the nanoparticles is 10wt%. Accordingly, although described in detail in an item of "4. A manufacturing method of a heat ray-shielding polyester film and a heat ray-shielding polyester film" as will be described later, the thickness of the polyester film is preferably set to be in a range of 10 to 300µm.

### 2. Coloring-preventing agent

It is found that the heat ray-shielding polyester film, in which a change of color due to ultraviolet rays is suppressed, can be obtained by containing and dispersing one or more kinds of coloring preventing agents selected from a phosphate-based coloring preventing agent, an amide-based coloring preventing agent, an amine-based coloring preventing agent, a hindered amine-based coloring preventing agent, a hindered phenol-based coloring preventing agent, and a sulfur-based coloring preventing agent, together with the aforementioned tungsten oxide nanoparticles and composite tungsten oxide nanoparticles.

The "coloring preventing agent" used in this embodiment refers to a compound having one or more functions of the functions of inhibiting initiation of a chain reaction, inhibiting the chain reaction, and decomposing peroxide.

Here, the function of inhibiting initiation of the chain reaction means the function of deactivating a metal ion, being a catalyst for generating a hazardous peroxide radical, and inhibiting the initiation of the chain reaction due to the peroxide radical.

Also, the function of inhibiting the chain reaction means the function of deactivating the generated peroxide radical and suppressing the chain reaction of generating new peroxide radical due to an action of the peroxide radical.

Further, the function of decomposing the peroxide means the function of decomposing the peroxide into a deactivated compound, thereby inhibiting a reaction of the peroxide from being decomposed and radicalized.

By the aforementioned function, the coloring preventing agent of this embodiment functions to inhibit the generation and increase of the hazardous peroxide radical that reduces tungsten atoms in the tungsten oxide nanoparticles or/and composite tungsten oxide nanoparticles.

The kind of the coloring preventing agent used in this embodiment will be descriebed.

In this embodiment, it is also possible to use the coloring preventing agent of any one of (a) phosphorus coloring preventing agent, (b) amide-based coloring preventing agent, (c) amine-based coloring preventing agent, (d) hindered amine-based coloring preventing agent, (e) hindered phenol-based coloring preventing agent, and (f) sulfur-based coloring preventing agent. Among them, (a) phosphorus coloring preventing agent is desirable, and particularly the phosphorus coloring preventing agent containing any one of the phosphonate group, phosphate group, phosphonic acid ester group, and phosphinate group is desirable, due to a high coloring suppressing effect during irradiation of ultraviolet rays.

Note that although the coloring preventing agent may be used singularly, two or more kinds of them may be combined and used. By a combined use of the coloring preventing agent mainly having the function of inhibiting initiation of the chain reaction, the coloring preventing agent mainly having the function of inhibiting the chain reaction, and the coloring preventing agent mainly having the function of decomposing the peroxide, depending on a used dispersing medium, a high coloring suppressing effect can be obtained in some cases.

An optimal content of the coloring preventing agent in the heat ray-shielding polyester film of this embodiment is different, depending on the kind of the used coloring preventing agent and the dispersing medium. However, generally, the content is preferably set to be 0.01wt% or more, 20wt% or less, and further preferably set to be 1wt% or more and 15wt% or less in the heat ray-shielding polyester film.

When the content of the coloring preventing agent in the heat ray-shielding polyester film is 0.01wt% or more, the radical generated by the ultraviolet rays can be sufficiently trapped, and the generation of the chain reaction of hazardous radicals is suppressed. Therefore, the generation of pentavalent tungsten can be suppressed, and it is possible to obtain an effect of suppressing coloring due to the ultraviolet rays. Meanwhile, when the content in the dispersing medium is 20wt% or less, radical polymerization of polymer resin is hardly inhibited by the coloring preventing agent, even when UV-curing resin is used as the dispersing medium. Therefore, the transparency and strength of the heat ray-shielding polyester film can preferably be maintained. Note that when a thermo-curing resin and/or thermoplastic resin is used as the dispersing medium, 20wt% or more of them is acceptable to be contained in the dispersing medium.

Regarding the coloring preventing agent of each kind, specific examples and general functions will be described.

### (a) Phosphorus coloring preventing agent

The phosphorus coloring preventing agent containing phosphorus is given as a first specific example of the coloring preventing agent. Further, a compound having the phosphorus functional groups containing phosphorus is preferable.

Here, the phosphorus functional groups include the one containing trivalent phosphorus and the one containing pentavalent phosphorus, and either one of them may be acceptable in the "phosphorus functional groups" of this embodiment.

A general formula of the phosphorus coloring preventing agent having the phosphorus functional groups containing trivalent phosphorus is expressed by the following (formula 1), and the phosphorus coloring preventing agent having the phosphorus functional groups containing pentavalent phosphorus is expressed by the following (formula 2).

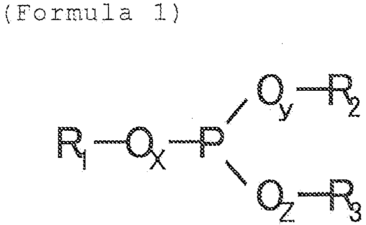

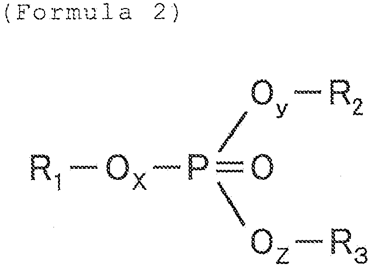

Note that in the formula 1 and the formula 2, values of x, y, z is 0 or 1. Further, R₁, R₂, and R₃ are each a hydrocarbon group having a straight-chain, a branched structure or a cyclic structure expressed by a general formula CₘHₙ, or a halogen atom or a hydrogen atom such as fluorine, chlorine, and bromine. Further, when y or z is 1, R₂ or R₃ may be a metal atom.

In this embodiment, the "phosphorus functional groups" refer to a part excluding R₁ in the formula 1 and the formula 2 (namely, general formula: -Oₓ-P(O_{y}R₂)(O_{z}R₃), or general formula: -Oₓ-P(O)(O_{y}R₂)(O₂R₃). Specifically, the phosphonate group (-P(O)(OH)₂), the phosphate group (-O-P(O)(OH)₂), the phosphonic acid ester group (-P(O)(OR₂)(OR₃)), the phosphate ester group (-O-P(O)(OR₂)(OR₃)), and the phosphinate group (-P(R₂)(R₃)), etc, can be given as examples of the phosphorous functional groups.

Out of these phosphorus functional groups, the functional group containing pentavalent phosphorous such as phosphonate group, phosphate group, phosphonic acid ester group, and phosphate ester group have mainly the function of inhibiting initiation of the chain reaction (namely, the function of chelating and trapping the metal ions by the adjacent phosphorus functional groups).

Meanwhile, it is so considered that the phosphorus functional groups containing trivalent phosphorus such as the phosphinate group have mainly the function of decomposing peroxide (namely, the function of decomposing the peroxide into a stable compound by self-oxidation of a P-atom).

Among these phosphorus functional groups, the phosphonate coloring preventing agent having the phosphonate group can efficiently trap the metal ions and excellent in stability such as a resistance to hydrolysis, and therefore is particularly suitable as the coloring preventing agent.

As a suitable example of a low molecular type phosphorus coloring preventing agent, specifically, phosphoric acid (HC₃PO₄)_{,} triphenyl phosphite ((C₆H₅O)₃P), trioctadecyl phosphite ((C₁₈H₂₇O)₃P), tridecyl phosphite ((C₁₀H₂₁O)₃P), trilauryltrithio phosphate ([CH₃(CH₂)₁₁S]₃P), etc, can be given.

Further, as suitable examples of polymer phosphorus coloring preventing agents, specifically, polyvinylsulfonic acid, polystyrenesulfonic acid, vinyl-based phosphoric acid (for example, acrylic phosphorus ester (CH₂ = CHCOOPO (OH)₂), vinyl alkyl phosphoric ester (CH₂ = CHR - O - PO(OH)₂, R is a polymer such as - (CH₂)ₙ-), polyether sulfone resin introduced with the phosphonate group, polyether ketone resin, straight type poly (trifluoro styrene) resin, crosslinking type (trifluoro styrene) resin, poly(2, 3-diphenyl-1, 4-phenyleneoxide) resin, poly(allyl ether ketone) resin, poly(allylene ether sulfone) resin, poly(phenyl quinoxaline), poly(benzyl silane) resin, polystyrene-graft-ethylen tetrafluoroethylene resin, polystyrene-graft-polyvinylidene fluoride, polystyrene-graft- tetrafluoroethylene resin, etc, can be given.

Further, in order to give excellent cloudless transparency to the infrared ray shielding material containing the tungsten oxide nanoparticles and/or the composite tungsten oxide nanoparticles of this embodiment, and effectively suppress coloring of the tungsten oxide nanoparticles and/or the composite tungsten oxide nanoparticles due to ultraviolet rays, a polymer phosphorous coloring preventing agent is preferable in some cases, depending on the kind of the dispersing medium. Further in addition, the polymer phosphorus coloring preventing agent, in which a crosslink structure is introduced to the polymer phosphorous coloring agent, is preferable in some cases.

### (b) Amide-based coloring preventing agent

A second specific example of the coloring preventing agent is a coloring preventing agent composed of a compound (called "an amide-based coloring preventing agent" in some cases in this embodiment) having an amide bond (-CO-NH-) in a molecule. It is so considered that the amide-based coloring preventing agent has mainly the function of inhibiting initiation of a chain reaction (namely, the function of chelating and trapping the metal ions by O atom and N atom of amide bond).

As suitable examples of low molecular type amide-based coloring preventing agents, N-salicyloyl-N'-aldehyde hydrazine(C₆H₄ (OH)-CONHNHCHO), N-salicyloyl-N'-acetyl hydrazine(C₆H₄(OH)-CONHNHCOCH₃), N,N'-diphenyl-oxamide(C₆H₅-NHCOCONH-C₆H₅),N,N'-di(2-hyd roxy phenyl)oxamide(C₆H₄(OH)-NHCOCONH-C₆H₄(OH)), etc, can be given.

Further, as suitable examples of polymer amid coloring preventing agents, a polymer of monomer such as vinyl, acrylic, methacryl, styryl having the aforementioned low molecular type amide-based coloring preventing agents on side chains, and a polymer with the aforementioned low molecular type amide-based coloring preventing agent incorporated into main chains, can be given.

Note that the polymer compound is sometimes more preferable than the low molecular-type compound, and when the polymer compound is used, the crosslink structure may be further introduced, and these points are the same as a case of the phosphorus coloring preventing agent.

### (c) Amine-based coloring preventing agent

A third specific example of the coloring preventing agent is a coloring preventing agent composed of a compound having a benzene ring in a molecule and an amino group (-NH₂) or an imino bond (-NH-) bonded to the benzene ring (called an "amine-based coloring preventing agent in some cases in this embodiment).

The amine-based coloring preventing agent is considered to have mainly the function of inhibiting a chain reaction (namely, the function of suppressing the chain reaction due to radical, by trapping the radical by the amino group or the imino bond bonded to the benzene rings).

As suitable examples of low molecular type amine-based coloring preventing agents, phenyl-β-naphthyl amine (C₆H₅-NH-C₁₀H₇), α-naphthyl amine (C₁₀H₇NH₂), N,N'-di-second butyl-p-phenylenediamine ((CH₃)₂CNH-C₆H₄-NHC(CH₃)₂), phenothiazine (C₆H₄SNHC₆H₄), N,N'-diphenyl-p-phenylenediamine(C₆H₅-NH-C₆H₄-NH-C₆H₅), etc, can be given.

Further, as suitable examples of polymer amine-based coloring preventing agents, the polymer of monomer such as vinyl, acrylic, methacryl, styryl having the aforementioned amine-based coloring preventing agents on the side chains, and a polymer with the aforementioned low molecular type amide-based coloring preventing agent incorporated into the main chains, can be given.

Note that the polymer compound is sometimes more preferable than the low molecular-type compound, and when the polymer compound is used, the crosslink structure may be further introduced, and these points are the same as a case of the phosphorus coloring preventing agent.

### (d) Hindered amine-based coloring preventing agent

A fourth specific example of the coloring preventing agent, is a 2,2,6,6,-tetramethyl piperidine derivative or 1, 2, 2, 6,6-pentamethyl-4-piperidine derivative (called a "hindered amine-based coloring preventing agent" in some cases in this embodiment.).

The hindered amine-based coloring preventing agent is considered to have mainly the function of inhibiting the chain reaction (namely, the function of trapping the radical and suppressing the chain reaction due to the radical).

As examples of the low molecular type hindered amine-based coloring preventing agents, 4-benzoyloxy-2,2,6,6-tetramethyl piperidine, 4-stearoyloxy-2,2,6,6- tetramethyl piperidine, 4-stearoyloxy-1,2,2,6,6-pentamethylpiperidine, 4-methacryloyloxy-1,2,2,6,6-tetramethylpiperidine, 4-methacryloyloxy-l,2,2,6,6-pentamethylpiperidine, bis(2,2,6,6-tetramethyl-4-piperidyl)sebacate, bis(1,2,2,6,6-pentamethyl-4-piperidyl)sebacate, bis(2,2,6,6-tetramethyl-1-octoxypiperidyl)sebacate, 4-{3-(3,5-di-t-butyl-4-hydroxyphenyl) propionyloxy}-1-[2-{3-(3,5-di-t-butyl-4-hydroxyphenyl) propionyloxy}ethyl]-2,2,6,6-tetramethylpiperidine, bis(1,2,2,6,6-pentamethyl-4-piperidyl)2-butyl-2-(3,5-d i-t-butyl-4-hydroxybenzyl)malonate, 8-acetyl-3-dodecyl-7,7,9,9-tetramethyl-1,3,8-triazaspiro[4.5]decan e-2,4-dion,tetrakis(2,2,6,6-tetramethyl-4-piperidyl)1, 2,3,4-butanetetracarboxylate, tetrakis(1,2,2,6,6-pentamethyl-4-piperidyl)1,2,3,4-butanetetracarboxylate, tridecyl·tris(2,2,6,6-tetramethyl-4-piperidyl)1,2,3,4-butanetetracarboxylate, tridecyl·tris(1,2, 2, 6, 6-pentamethyl-4-piperidyl)1,2,3,4-butanetetracarboxylate, ditridecyl·bis(2,2,6,6-tetramethyl-4-piperidyl)1,2,3,4 -butanetetracarboxylate, ditridecyl-bis (1,2,2,6,6-pentamethyl-4-piperidyl)1,2,3,4-butanetetracarboxylate ,3,9-bis[1,1-dimethyl-2-{tris(2,2,6,6-tetramethyl-4-pi peridyloxy carbonyl)butylcarbonyloxy}ethyl]-2,4,8,10-tetraoxaspiro[5,5]undecane,3,9-bis[1,1-dimethyl-2-{tri s(1,2,2,6,6-pentamethyl-4-piperidyloxy carbonyl)butyl carbonyloxy}ethyl]-2,4,8,10-tetraoxaspiro[5,5]undecane, 2,2,4,4-tetramethy120-(β-lauryloxycarbonyl)-ethyl-7-ox a-3,20-diazadispiro[5,1,11,2]-heneicosan-21-one,2,4,6-tris{N-cyclohexyl-N-(2-oxo-3,3,5,5-tetramethylpiperazi nedione)ethyl}-1,3,5-triazine, etc, can be given.

Preferably, bis(2,2,6,6-tetramethyl-4-piperidyl)sebacate, bis(1,2,2,6,6-pentamethyl-4-piperidyl)sebacate, bis(2,2,6,6-tetramethyl-1-octyloxy-4-piperidyl)sebacate, bis(1,2,2,6,6-pentamethyl-4-piperidyl)2-butyl-(3,5-ji-t-butyl-4-hydr oxybenzyl) malonate, 8-acetyl-3-dodecyl-7,7,9,9-tetramethyl-1,3, 8-triazaspiro[4.5]decane-2,4-dion, 2,2,4,4-tetramethyl-20-(β-lauryloxycarbonyl)-ethyl-7-o xa-3,20-diazadispiro[5,1,11,2]-heneicosan-21-one, tetrakis(1,2,2,6,6-pentamethy-4-piperidyl)1,2,3,4-but anetetracarboxylate, tridecyl·tris(1,2,2,6,6-pentamethyl-4-piperidyl)1,2,3,4-butanetetracarboxylate, 4-{3-(3,5-di-t-butyl-4-hydroxyphenyl)propionyloxy}-1-[ 2-{3-(3,5-di-t-butyl-4-hydroxyphenyl)propionyloxy}ethy 1]-2,2,6,6-tetramethyl piperidine, and more preferably bis(1,2,2,6,6-pentamethyl-4-piperidyl)sebacate, bis(2,2,6,6-octyloxy-4-piperidyl)sebacate, bis (1,2,2,6,6-pentamethyl-4-piperidyl)2-butyl-(3,5-ji-t-butyl-4-hydroxybenzyl)malonate,8-acetyl-3-dodecyl-7, 7,9,9-1etramethyl-1,3,8-triazaspiro[4.5]decane-2,4-dion, 2,2,4,4-tetramethyl-20-(β-lauryloxycarbonyl)-ethyl-7-o xa-3,20-diazadispiro[5,1,11,2]-heneicosan-21-one, tridecyl-tris(1,2,2,6,6-pentamethyl-4-piperidyl)-1,2,3,4-butanetetracarboxylate, 4-{3-(3,5-di-t-butyl-4-hydroxyphenyl) propionyloxy}-1-[2-{3-(3,5-di-t-butyl-4-hydroxyphenylp ropionyloxy}ethyl]-2,2,6,6-tetramethyl piperidine, can be given.

Further, as suitable examples of hindered amine-based coloring preventing agents, the polymer of the monomer such as vinyl, acrylic, methacryl, styryl having the hindered amine-based coloring preventing agents on its side chains, and the monomer with a structure of the hindered amine-based coloring preventing agents incorporated into the main chains, can be given.

Note that the polymer compound is sometimes more preferable than the low molecular-type compound, and when the polymer compound is used, the crosslink structure may be further introduced, and these points are the same as a case of the phosphorus coloring preventing agent.

### (e) Hindered amine-based coloring preventing agents

A fifth example of the coloring preventing agent is a compound with a large group such as tertiary butyl group introduced to a first order of "o" of the phenol OH group (called a "hindered phenol-based coloring preventing agent" in some cases in this embodiment). Similarly to the aforementioned hindered amine-based coloring preventing agent, it is so considered that the hindered phenol-based coloring preventing agent has mainly the function of inhibiting the chain reaction (namely, the function of trapping the radical by the phenol OH group and suppressing the chain reaction due to the radical).

As suitable examples of low molecular type hindered phenol-based coloring preventing agents, 2,6-tertiary butyl-p-cresol, 2,6-di-tertiary butyl-phenol, 2,4-di-methyl-6-tertiary butyl-phenol, butylhidroxyanisole, 2,2'-methylenebis(4-methyl-6-tertiary butylphenol), 4,4'-butylidenebis(3-methyl-6-tertiary butylphenol), 4,4'-thiobis(3-methyl-6-tertiary butylphenol), tetrakis[methylene-3(3,5-di-tertiary butyl-4-hydroxyphenyl) propionate]methane, 1,1,3-tris(2-methyl-4-hydroxy-5-tertiary butylphenyl) butane, etc, can be given.

Further, as suitable examples of polymer hindered phenol-based coloring preventing agents, the polymer of the monomer such as vinyl, acrylic, methacryl, styryl having the hindered amine-based coloring preventing agents on its side chains, and the monomer with a structure of the hindered amine-based coloring preventing agents incorporated into the main chains, can be given.

Note that the polymer compound is sometimes more preferable than the low molecular-type compound, and when the polymer compound is used, the crosslink structure may be further introduced, and these points are the same as a case of the phosphorus coloring preventing agent.

However, there are a lot of unexplained points in a trapping process of a hazardous radical of the aforementioned each kind of coloring preventing agent, and there is also a possibility that an action other than the aforementioned ones work, and the action is not limited to the aforementioned actions.

### (f) Sulfur-based coloring preventing agent

A sixth specific example of the coloring preventing agent is a compound having bivalent sulfur in a molecule (called a a "sulfur-based coloring preventing agent" in some cases in this embodiment). It is so considered that the sulfur-based coloring preventing agent has manly the function of decomposing the peroxide (namely, the function of decomposing the peroxide into a stable compound by self-oxidation of S-atom).

As suitable examples of low molecular type sulfur-based coloring preventing agents, dilauryl thiodipropionate (S(CH₂CH₂COOC₁₂H₂₅)₂), distearyl thiodipropionate (S(CH₂CH₂COOC₁₃H₃₇)₂), lauryl stearyl thodipropionate (S(CH₂CH₂COOC₁₈H₃₇)(CH₂CH₂COOC₁₂H₂₅)), dimyristylthiodipropionate(S(CH₂CH₂COOC₁₄H₂₉)₂), distearyl β, β'-thiodibutilate (S(CH(CH₃)CH₂COOC₁₈H₃₉)₂), 2-mercaptobenzimidazole(C₆H₄NHNC8H), dilaurylsulfide (S(C₁₂H₂₅)₂)), etc, can be given.

Further, as suitable examples of polymer sulfur-based coloring preventing agents, a polymer of monomer such as vinyl, acrylic, methacryl, styryl having the aforementioned sulfur-based coloring preventing agents on the side chains, and a polymer with the aforementioned sulfur-based coloring preventing agents incorporated into the main chains, can be given.

Note that the polymer compound is sometimes more preferable than the low molecular-type compound, and when the polymer compound is used, the crosslink structure may be further introduced, and these points are the same as a case of the phosphorus coloring preventing agent.

### 3. A coloring mechanism by ultraviolet rays of the tungsten oxide nanoparticles and the composite tungsten oxide nanoparticles, and an action mechanism of the coloring preventing agents to this coloring mechanism

First, the coloring mechanism by the tungsten oxide nanoparticles and the composite tungsten oxide nanoparticles of this embodiment will be described.

When the resin constituting the heat ray-shielding polyester film of this embodiment is irradiated with the ultraviolet rays, secondary substances such as proton, heavy metal ions, dehydrogenation radical, peroxide radical, and hydroxyl radical, being hazardous radicals, are generated one after the other, in a reaction of a process in which a high polymer chain of this medium resin is cut and decomposed by an energy of the ultraviolet rays. Then, the hazardous radicals, being the secondary substances, cut the polymer chain of the medium resin this time, and therefore deterioration of the polymer and generation of the hazardous radicals are progressed in a chain reaction manner. Then, any one of the hazardous radicals generated in a chain reaction manner reductively acts on the tungsten atoms in the tungsten oxide nanoparticles and/or the composite tungsten oxide nanoparticles, to thereby newly generate pentavalent tungsten. This pentavalent tungsten produces deep blue color, and therefore it can be estimated that coloring concentration is increased, with an increase of the pentavalent tungsten in the heat ray-shielding polyester film.

There are a lot of unexplained parts, regarding a mechanism of coloring the tungsten oxide nanoparticles and the composite tungsten oxide nanoparticles by the radicals generated in the medium resin. However, the aforementioned mechanism can be estimated as an assumption. Further, it can be estimated that radicalization of a polymer framework of the medium resin contributes to the coloring of the tungsten oxide nanoparticles and the composite tungsten oxide nanoparticles. Therefore, the inventors reach a conclusion that suppression of such generation reaction of the radicals and chain reaction of radical generation leads to an improvement of a durability of the heat ray-shielding polyester film. Namely, by making the aforementioned coloring preventing agents exist in the heat ray-shielding polyester film containing the tungsten oxide nanoparticles and the composite tungsten oxide nanoparticles, the hazardous radicals generated in this coloring preventing agents due to the ultraviolet rays can be trapped. It is found that by trapping the hazardous radicals, coloring of the tungsten oxide nanoparticles and the composite tungsten oxide nanoparticles (generation of new pentavalent tungsten) can be prevented and the change of the color tone of the heat ray-shielding polyester film due to the ultraviolet rays can be suppressed.

The heat ray-shielding polyester film of this embodiment has a structure that the tungsten oxide nanoparticles and/or the composite tungsten oxide nanoparticles are dispersed in the medium resin. With this structure, the generation of the pentavalent tungsten involved in irradiation of the ultraviolet rays can be suppressed and the change of coloring can be suppressed. As a result, it becomes possible to suppress a reduction rate of the visible light transmittance in the infrared ray-shielding nanoparticles dispersion, after emitting the ultraviolet rays to the infrared ray-shielding nanoparticles dispersion of this embodiment.

### 4. A manufacturing method of the heat ray-shielding polyester film, and the heat ray-shielding polyester film

A manufacturing method of the heat ray-shielding polyester film can be arbitrarily selected, provided that it is a method of uniformly dispersing the nanoparticles having the heat ray-shielding function into resin. For example, it is possible to use a method of directly adding the nanoparticles to the resin and uniformly melting and mixing them. Particularly, it is easy and preferable to use a method of preparing a dispersion liquid in which the nanoparticles of the heat ray-shielding components are dispersed in an organic solvent together with a dispersant, then preparing a powder raw material obtained by removing the organic solvent from this dispersion liquid, and molding the heat ray-shielding polyester film by using a composition for molding, which is mixed with the resin or resin raw materials.

A method for dispersing the nanoparticles into the resin having the heat ray--shielding function is not particularly limited, provided that it is a method capable of uniformly dispersing the nanoparticles into the resin.

However, it is more preferable to use a method of using the powder raw material obtained by removing the organic solvent from the dispersion liquid, with the nanoparticles dispersed in an arbitrary solvent as described above.

Specifically, by a method using, for example, a beads mill, a ball mill, a sand mill, and ultrasonic wave dispersion, the particles are dispersed in an arbitrary solvent together with the dispersant, to thereby obtain the dispersion liquid. A solvent is removed from the dispersion liquid by using a method such as reduced pressure drying, to thereby obtain the powder raw material.

A dispersion solvent used in the dispersion liquid is not particularly limited, and can be selected according to dispersability and solubility of the particles, and a general organic solvent can be used. Moreover, pH may be adjusted by adding acid and alkali as needed.

In order to manufacture the heat ray-shielding polyester film by using the aforementioned powder raw material, generally the powder raw material is added to polyester resin, and by a method of mixing them using a ribbon blender, and uniformly melting and mixing them using a mixing machine such as a tumbler, a Nauta mixer, a Henschel mixer, a super mixer, and a planetary mixer, and a kneading machine such as a Banbury mixer, a kneader, a roll, a single screw extruder, and a twin screw extruder, a mixture, with the nanoparticles uniformly dispersed in the polyester resin, is prepared.

The heat ray-shielding polyester film of this embodiment can be prepared by molding the mixture, with nanoparticles uniformly dispersed in the polyester resin as described above, by a publicly-known molding method such as a calender process. Further, it is also possible that the mixture, with nanoparticles uniformly dispersed in the resin, is palletized once by a granulation apparatus, and thereafter the heat ray-shielding polyester film is prepared by the same method.

A resin coating containing an ultraviolet absorber may also be formed on at least one film surface of the heat ray-shielding polyester film. For example, an ultraviolet absorbing film can be formed, by coating the surface of the heat ray-shielding resin sheet material with a coating liquid, with a benzotriazole-based or a benzophenone-based organic ultraviolet absorber, or an inorganic ultraviolet absorber such as zinc oxide and cerium oxide, dissolved in each kind of binder, and curing it. By such a formation of the ultraviolet absorbing film, the weatherability of the heat ray-shielding polyester film can be improved, and the ultraviolet ray-shielding effect can also be given to this heat ray-shielding polyester film.

As the polyester resin used in this embodiment, for example as acid components, an aromatic dicarboxylic acid such as terephthalic acid, isophthalic acid, naphthalanedicarboxylic acid; and alicyclic dicarboxylic acid such as adipic acid, sebacic acid, dodecadione acid, azelaic acid; and alicyclic dicarboxylic acid such as cyclohexanedicarboxylic acid, are used, and as alcoholic components, alicyclic glycol such as ethylene glycol, diethylene glycol, polyethylene glycol; and aromatic glycol such as cyclohexanedimethanol, are used. These polyester resins may be used singularly or may be copolymerized with other component. Specifically, polyethylene terephthalate, or polyethylene-2,6-naphthalate is suitable from the viewpoint of a cost and characteristics.

Each kind of additive may be added to this polyester resin, as needed. As the additive, each kind of inorganic and organic particle can be used, and as its particle shape, each kind of particle shapes such as a pearly state, an agglomerating state, a scaly state, and beads state, can be used. The organic particle composed of thermoplastic resin such as cross-linked polystyrene, cross-linked acrylic resin, fluorine resin, and imide resin, can also be used.

Further, in the polyester film, total haze (wherein, film thickness: 25µm conversion) is preferably set to be 2.5% or less. In a case of the haze of 2.5% or less, transparency can be ensured, when this polyester film is used for covering windows or covering each kind of equipment.

Further, the thickness of the polyester film is preferably set in a range of 10 to 300µm. In a case of a film having a thickness of 10µm or more, a sufficient resistance to weather can be obtained, and a thin film having 300µm or less is excellent in processability and handling, and is suitable for being used for covering windows or covering each kind of equipment.

In addition, in this embodiment, an easy adhesion layer made of water soluble or water dispersible resin can also be provided on the surface of the polyester film.

The water soluble or water dispersible resin layer is not particularly limited. For example, acrylic resin, urethane resin, polyester resin, olefin resin, fluorine resin, vinyl resin, chlorine resin, styrene resin, each kind of graft, resin, epoxy resin, and silicone resin, etc, can be used, and also the mixture of them can also be used.

Thus, it is possible to provide the heat ray-shielding polyester film having the heat ray-shielding function, and having a high transmittance capability in the visible light region, and further capable of suppressing the change of color tone due to ultraviolet rays, without using a physical film forming method involving a high cost and a complicated adhesion process, by dispersing the tungsten oxide nanoparticles and/or the composite tungsten oxide nanoparticles having a strong absorption in the near infrared region, uniformly in the polyester resin as the heat ray-shielding components, and molding this polyester resin into a film shape.

It is also preferable that the aforementioned any one of the heat ray-shielding polyester films is formed into a heat ray-shielding polyester film laminate, by being laminated on other transparent base material, according to a purpose of use. By forming the heat ray-shielding polyester film into the heat ray-shielding polyester film laminate, the laminate showing various mechanical characteristics can be obtained, and also by using the heat ray-shielding polyester film, in a part or the whole part of the laminate, the laminate having desired optical characteristics can be obtained.

### 5. Characteristics evaluation of the heat ray-shielding polyester film

In the heat ray-shielding polyester film of this embodiment, an evaluation method for the effect of suppressing the change of coloring due to irradiation of ultraviolet rays, will be explained.
(1) The heat ray-shielding polyester film not containing the coloring preventing agent of this embodiment is prepared. Then, a prescribed amount of ultraviolet rays is emitted to this heat ray-shielding polyester film, and reduction of the visible light transmittance due to the change of color tone caused by the irradiation of the ultraviolet rays, is measured.
(2) The heat ray-shielding polyester film same as that of the aforementioned (1) is prepared, other than a point that the coloring preventing agent of this embodiment is contained. Then, a prescribed amount of ultraviolet rays is emitted to this heat ray-shielding polyester film, and the reduction of the visible light transmittance due to the change of color tone by this irradiation is measured.
(3) When the reduction of the visible light transmittance obtained by (1) is standardized as 100%, the reduction of the visible light transmittance obtained in (2) is calculated and from this calculated value, the capability of the heat ray-shielding polyester film containing the coloring preventing agent of this embodiment to suppress the change of color due to ultraviolet rays, is evaluated.

For example, when it is assumed that the heat ray-shielding polyester film not containing the coloring preventing agent of this embodiment has 70% visible light transmittance before irradiation of the ultraviolet rays, and 50% visible light transmittance after irradiation of the ultraviolet rays, and the heat ray-shielding polyester film containing the coloring preventing agent of this embodiment has 68% visible light transmittance after irradiation of the ultraviolet rays, it is found that variation Δ of the visible light transmittance of the heat ray-shielding polyester film not containing the coloring preventing agent of this embodiment is 70% - 50% = 20%. Meanwhile, the variation Δ of the visible light transmittance of the heat ray-shielding polyester film containing the coloring preventing agent of this embodiment is 70% - 68% = 2%.

Accordingly, when the variation A of the visible light transmittance of the heat ray-shielding polyester film not containing the coloring preventing agent of this embodiment is standardized as 100%, the variation A of the visible light transmittance of the heat ray-shielding polyester film containing the coloring preventing agent of this embodiment is calculated to be 10%.

However, the prescribed amount of the ultraviolet rays means the amount of the ultraviolet rays, under continuous irradiation for 2 hours at intensity of 100mW/cm², by using EYE SUPER UV TESTER (SUV-W131) by Iwasaki Electric Co., Ltd. (At this time, temperature of a black panel is set to be 60°C).

According to this calculation method, it is possible to objectively evaluate the capability of the coloring preventing agent of the heat ray-shielding polyester film of this embodiment to suppress the change of color due to ultraviolet rays.

Further, according to an examination by the inventors of the present invention, it is found that when the variation Δ of the visible light transmittance of the heat ray-shielding polyester film containing the coloring preventing agent of this embodiment is 70% or less, sufficient capability of the coloring preventing agent of this embodiment to suppress the change of color due to ultraviolet rays can be confirmed, and also in a practical use, the change of coloring due to ultraviolet rays included in solar rays is suppressed.

### Examples

Examples of the present invention will be specifically explained, together with comparative examples, with reference to table 1. However, the present invention is not limited to the examples described below.

Moreover, in each example, powder colors (10° visual field, light source D65) of the tungsten oxide nanoparticles and the composite tungsten oxide nanoparticles, and the visible light transmittance and the solar light transmittance of the heat ray-shielding resin sheet material were measured by using a spectrophoto-meter produced by HITACHI . The solar light transmittance is an index showing the heat ray-shielding capability. Further, the haze value was measured based on JIS K 7105, by using HR-20C produced by MURAKAMI COLOR RESEARCH LABORATOY.

### [Example 1]

A quartz boat, with 50g of H₂WO₄ put therein, was set in a quartz tubular furnace, which was then heated while 5% of H₂ gas was supplied, with N₂ gas as a carrier, and reduced for 1 hour at a temperature of 600°C, and thereafter baked for 30 minutes at 800°C in an N₂ gas atmosphere, to thereby obtain particle "a" . As the powder color of this particle "a", L* was 36.9288, a* was 1.2573, b* was -9.1526, and as a result of identifying the crystal phase by powder X-ray diffraction, the crystal phase of W₁₈O₄₉ was observed.

Next, 5wt% of the particle "a", 5wt% of the polymer dispersant, and 90wt% of methyl isobutyl ketone were weighed, which were then pulverized/dispersed for 6 hours by a paint shaker, with 0.3mmΦ of ZrO₂ beads put therein, to thereby prepare the tungsten oxide nanoparticle dispersion liquid (liquid A). Here, when the dispersed particle size of the tungsten oxide nanoparticles in the dispersion liquid (liquid A) was measured by a particle size distribution meter ELS-800 produced by OTSUKA ELECTRONICS CO, LTD., it was 86nm.

Next, from the obtained dispersion liquid (liquid A), methyl isobutyl ketone was removed by vacuum distillation, to thereby obtain a powder raw material (powder A). The powder raw material (powder A) was added to the polyester resin, so that the content of the particle "a" was 1.2wt%, which were then mixed by the blender, and uniformly kneaded by the twin screw extruder, and thereafter molded into a film having a thickness of 50µm by using a T-die, to thereby prepare the heat ray-shielding polyester film (sample 1) of an example 1, with the heat ray-shielding nanoparticles uniformly dispersed overall.

The dispersed particle size of the oxide particles in the obtained heat ray-shielding polyester film was 88nm when observed by the cross-section TEM observation.

The solar light transmittance was 47.5% when the visible light transmittance was 65.1%, and the haze value was 1.5%.

**[Table 1]**

| | Composition | Dispersed particle size | | Content of particle | Thickness of polyester film | Visible light transmittance | Solar light trans - mittance | Haze | Remark |
|---|---|---|---|---|---|---|---|---|---|
| | | In dispersion liquid | In film | | | | | | |
| | | (nm) | (nm) | (wt%) | (*µ*m) | (%) | (%) | (%) | |
| Example1 | W₁₈O₄₉ | 86 | 88 | 1.2 | 50 | 65.1 | 47.5 | 1.5 | |
| Example2 | W₁₈O₄₉ | 86 | 62 | 0.2 | 300 | 64.3 | 47.3 | 1.4 | |
| Example3 | Cs_{0.3}WO₃ | 86 | 62 | 1.2 | 50 | 77.5 | 48.3 | 1.4 | |
| Example4 | Cs_{0.3}WO₃ | 86 | 62 | 6 | 10 | 77.5 | 48.3 | 1.4 | |
| Example5 | Cs_{0.3}WO₃ | 86 | 62 | 0.2 | 300 | 78.1 | 48.8 | 1.2 | |
| Comparative Example 1 | Cs_{0.3}WO₃ | 86 | | 0.09 | 300 | 87.1 | 75.1 | 1 | |
| Comparative Example 2 | Cs_{0.3}WO₃ | 86 | | 10.1 | 10 | 70.1 | 37.1 | 1 | Abrasion strength is low |

### [Example 2]

The heat ray-shielding polyester film (sample 2) was prepared in the same way as the example 1, other than a point that the powder raw material (powder A) was added to the polyester resin, so that the content of the particle "a" was 0.2wt% and this polyester resin was molded into a film having a thickness of 300µm.

The dispersed particle size of the oxide nanoparticles in the obtained heat ray-shielding polyester film was 62nm when observed by the cross-section TEM observation.

The solar light transmittance was 47.3% when the visible light transmittance was 64.3%, and the haze value was 1.4%.

### [Example 3]

The powder obtained by sufficiently mixing 50g of H₂WO₄ and 17.0g of Ca(OH)₂ by the agate mortar was heated while 5% of H₂ gas was supplied, with N₂ gas as a carrier, and reduced for 1 hour at a temperature of 600°C, and thereafter baked for 30 minutes at 800°C in the N₂ gas atmosphere, to thereby obtain particle "b" (composition formula was expressed by Cs_{0.3}WO₃, and in the powder color of this particle "b", L* was 35.2745, a* was 1.4918, b* was -5.3118).

Next, 5wt% of the particle "b", 5wt% of the polymer dispersant, and 90wt% of methyl isobutyl ketone were weighed, which were then pulverized/dispersed for 6 hours by a paint shaker, with 0,3mmΦ of ZrO₂ beads put therein, to thereby prepare the composite tungsten oxide nanoparticle dispersion liquid (liquid B). Here, when the dispersed particle size of the tungsten oxide nanoparticles in the dispersion liquid (liquid B) was measured by a particle size distribution meter ELS-800 produced by OTSUKA ELECTRONICS CO, LTD., it was 86nm.

Next, from the obtained dispersion liquid (liquid B), methyl isobutyl ketone was removed by vacuum distillation, to thereby obtain a powder raw material (powder B). The powder raw material (powder B) was added to the polyester resin, so that the content of the particle "b" was 1.2wt%, which were then mixed by the blender, and uniformly kneaded by the twin screw extruder, and thereafter molded into a film having a thickness of 50µm by using a T-die, to thereby prepare the heat ray-shielding polyester film (sample 3) of an example 3, with the heat ray-shielding nanoparticles uniformly dispersed overall.

The dispersed particle size of the oxide nanoparticles in the obtained heat ray-shielding polyester film was 62nm when observed by the cross-section TEM observation.

The solar light transmittance was 48.3% when the visible light transmittance was 77.5%, and the haze value was 1.4%.

### [Example 4]

The heat ray-shielding polyester film (sample 4) of an example 4 was obtained in the same way as the example 3, other than a point that the powder raw material (powder B) was added to the polyester resin so that the content of the particle "b" was 6wt%, and this polyester resin was molded into a film having a thickness of 10µm.

The dispersed particle size of the oxide nanoparticles in the obtained heat ray-shielding polyester film was 62nm, when observed by the cross-section TEM observation.

The solar light transmittance was 48.3% when the visible light transmittance was 77.5%, and the haze value was 1.4%.

### [Example 5]

The heat ray-shielding polyester film (sample 5) of an example 5 was obtained in the same way as the example 3, other than a point that the powder raw material (powder B) was added to the polyester resin so that the content of the particle "b" was 0.2wt%, and this polyester resin was molded into a film having a thickness of 300µm.

The dispersed particle size of the oxide nanoparticles in the obtained heat ray-shielding polyester film was 62nm, when observed by the cross-section TEM observation.

The solar light transmittance was 48.8% when the visible light transmittance was 78.1%, and the haze value was 1.2%.

### [Comparative example 1]

The heat ray-shielding polyester film (sample 6) of an example 6 was obtained in the same way as the example 3, other than a point that the powder raw material (powder B) was added to the polyester resin so that the content of the particle "b" was 0.09wt%, and this polyester resin was molded into a film having a thickness of 300µm.

The solar light transmittance was 75.1% when the visible light transmittance was 87.1%, and the haze value was 1.0%.

There is less content of the particle "b", which is 0.09wt%, and therefore the solar light transmittance is high, thus failing to exhibit practical heat ray-shielding characteristics.

### [Comparative example 2]

The heat ray-shielding polyester film (sample 7) of an example 7 was obtained in the same way as the example 3, other than a point that the powder raw material (powder B) was added to the polyester resin so that the content of the particle "b" was 10.1wt%, and this polyester resin was molded into a film having a thickness of 10µm. The solar light transmittance was 37.1% when the visible light transmittance was 70.1%, and the haze value was 1.0%.

There is much content is 10.1wt%, and therefore the abrasion resistance of the surface of the heat ray-shielding polyester film is remarkably lowered, thus easily damaging the surface by being rubbed with fingernails, which is unpractical.

### [Example 6]

The heat ray-shielding polyester film (sample 8) of an example 6 was prepared in the same way as the example 1, other than a point that the powder raw material (powder A) was added to the polyester resin so that the content of the particle "a" was 0.2wt%, and resorcinol-bis(diphenyl-phosphate)[produced by AJINOMOTO, product name: " REOFOS " RDP], being the phosphorous coloring preventing agent, was 0.4wt%, and this polyester resin was molded into a film having a thickness of 300µm.
The dispersed particle size of the oxide nanoparticles in the obtained heat ray-shielding polyester film was 64nm when observed by the cross-section TEM observation. The solar light transmittance was 48.3% when the visible light transmittance was 65.4%, and the haze value was 1.5%.

When this heat ray-shielding polyester film was irradiated with ultraviolet rays for 2 hours and thereafter the optical characteristics were measured, it was found that the visible light transmittance was 64.0%, and the haze value was 1.5%. It was also found that the reduction of the visible light transmittance due to irradiation of the ultraviolet rays was 1.4%, which was small, and there was less change of color tone. Further, even after irradiation of the ultraviolet rays, it was found that the haze value was not varied, and the transparency was maintained.

Meanwhile, when the heat ray-shielding polyester film obtained by the example 1 was similarly irradiated with ultraviolet rays for 2 hours, and the variation Δ of the visible light transmittance was calculated. Then, it was found that the variation Δ was 6.8% and this heat ray-shielding polyester film had a sufficient capability to suppress the change of color due to ultraviolet rays, by adding the coloring preventing agent.

Note that continuous irradiation of the ultraviolet rays for 2 hours was performed by using EYE SUPER UV TESTER (SUV-W131) produced by Iwasaki Electric Co., Ltd., at intensity of 100mW/cm².

## Claims

1. A heat ray-shielding polyester film, with nanoparticles having a heat ray-shielding function dispersed therein,
wherein the nanoparticles having the heat ray-shielding function are tungsten oxide nanoparticles expressed by a general formula WOₓ (satisfying 2.45 ≤ x ≤ 2.999) and/or composite tungsten oxide nanoparticles expressed by a general formula M_{y}WO_{z} (M is one or more kinds of elements selected from Cs, Rb, K, Tl, In, Ba, Li, Ca, Sr, Fe, Sn, Al, and Cu; satisfying 0.1 ≤ y ≤ 0.5, 2.2 ≤ z ≤ 3.0) and having a hexagonal crystal structure, and an average dispersed particle size of the nanoparticles is 1 nm or more and 200 nm or less, a content of the nanoparticles is 0.1 wt% or more and 10 wt% or less, and a thickness of the polyester film is 10 µm or more and 300 µm or less, and
**characterized by** coloring preventing agents dispersed in the heat ray-shielding polyester film, the coloring preventing agents being a phosphorus-based coloring preventing agent containing one or more kinds of groups selected from any one of a phosphonate group, a phosphate group, a phosphonate ester group, and a phosphinate group.

2. The heat ray-shielding polyester film according to claim 1, wherein a content of the coloring preventing agents is 0.1wt% or more and 20 wt% or less.

3. The heat ray-shielding polyester film according to claim 1 or 2, wherein a visible light transmittance of the heat ray-shielding polyester film is set to be 60% or more and 70% or less, and when a reduction rate of the visible light transmittance is standardized as 100% after emitting ultraviolet rays for 2 hours at intensity of 100 mW/cm² to a heat ray-shielding polyester film having the same composition with the composition of the aforementioned heat ray-shielding polyester film other than a point that the coloring preventing agent is not contained, the reduction rate of the visible light transmittance is 70% or less after emitting the ultraviolet rays to this heat ray-shielding polyester film, for the same hours, at the same intensity.

4. A heat ray-shielding polyester film laminate, which is obtained by laminating the heat ray-shielding polyester film according to any one of claims 1 to 3 on other transparent base material.

5. The heat ray-shielding polyester film according to any one of claims 1 to 3, wherein a resin coating containing an ultraviolet absorber is formed on at least one film surface of the heat ray-shielding polyester film.

6. The heat ray-shielding polyester film according to any one of claims 1, 2, 3, and 5, wherein an easy adhesion layer made of water soluble or water dispersible resin is provided on a surface of the heat ray-shielding polyester film.

## Patentansprüche

1. Wärmestrahlungsabschirmungs-Polyesterfilm mit darin dispergierten Nanopartikeln mit einer Wärmestrahlungsabschirmungsfunktion,
wobei die Nanopartikel mit der Wärmestrahlungsabschirmungsfunktion Wolframoxid-Nanopartikel sind, die durch eine allgemeine Formel WOₓ (mit 2,45 ≤ x ≤ 2,999) ausgedrückt sind, und/oder Verbund-Wolframoxid-Nanopartikel, die durch eine allgemeine Formel M_{y}WO_{z} ausgedrückt sind (wobei M eine oder mehr Arten von Elementen ausgewählt aus Cs, Rb, K, Tl, In, Ba, Li, Ca, Sr, Fe, Sn, Al und Cu ist; mit 0,1 ≤ y ≤ 0,5, 2,2 ≤ z ≤ 3,0) und eine hexagonale Kristallstruktur haben, und wobei eine mittlere dispergierte Partikelgröße der Nanopartikel 1 nm oder mehr und 200 nm oder weniger ist, wobei ein Nanopartikel-Gehalt 0,1 Gew.-% oder mehr und 10 Gew.-% oder weniger ist, und wobei eine Dicke des Polyesterfilms 10 µm oder mehr und 300 µm oder weniger ist,
und
**gekennzeichnet durch** Verfärbungsverhinderungsagenzien, die in dem Wärmestrahlungsabschirmungs-Polyesterfilm dispergiert sind, wobei die Verfärbungsverhinderungsagenzien ein phosphorbasiertes Verfärbungsverhinderungsagens sind, das eine oder mehr Arten von Gruppen ausgewählt aus einer Phosphonatgruppe, einer Phosphatgruppe, einer Phosphonatestergruppe und einer Phosphinatgruppe enthält.

2. Wärmestrahlungsabschirmungs-Polyesterfilm nach Anspruch 1, wobei ein Gehalt der Verfärbungsverhinderungsagenzien 0,1 Gew.-% oder mehr und 20 Gew.-% oder weniger ist.

3. Wärmestrahlungsabschirmungs-Polyesterfilm nach Anspruch 1 oder 2, wobei eine Transmittanz des Wärmestrahlungsabschirmungs-Polyesterfilms für sichtbares Licht auf 60% oder mehr und 70% oder weniger eingestellt ist, und wenn eine Reduktionsrate der Transmittanz für sichtbares Licht als 100% standardisiert ist nach Aussendung von Ultraviolettstrahlen während zwei Stunden bei einer Intensität von 100 mW/cm² auf einen Wärmestrahlungabschirmungs-Polyesterfilm, der die gleiche Zusammensetzung hat wie die Zusammensetzung des genannten Wärmestrahlungsabschirmungs-Polyesterfilms mit der Ausnahme, dass das Verfärbungsverhinderungsagens nicht enthalten ist, die Reduktionsrate der Transmittanz für sichtbares Licht 70% oder weniger nach Emission der Ultraviolettstrahlen auf diesen Wärmestrahlungabschirmungs-Polyesterfilm für die gleiche Zeit bei der gleichen Intensität ist.

4. Wärmestrahlungsabschirmungs-Polyesterfilmlaminat, das erhalten ist durch Laminieren des Wärmestrahlungsabschirmungs-Polyesterfilms nach einem der Ansprüche 1 bis 3 auf ein anderes transparentes Basismaterial.

5. Wärmestrahlungsabschirmungs-Polyesterfilm nach einem der Ansprüche 1 bis 3, wobei eine Harzbeschichtung, die einen Ultraviolettabsorber enthält, auf wenigstens einer Filmoberfläche des Wärmestrahlungsabschirmungs-Polyesterfilms gebildet ist.

6. Wärmestrahlungsabschirmungs-Polyesterfilm nach einem der Ansprüche 1, 2, 3 und 5, wobei eine Schicht mit leichter Adhäsion, die aus wasserlöslichem oder wasserdispergierbarem Harz hergestellt ist, auf einer Oberfläche des Wärmestrahlungsabschirmungs-Polyesterfilms vorgesehen ist.

## Revendications

1. Film en polyester de protection contre les rayons thermiques, avec des nanoparticules ayant une fonction de protection contre les rayons thermiques dispersées à l'intérieur,
dans lequel les nanoparticules ayant la fonction de protection contre les rayons thermiques sont des nanoparticules d'oxyde de tungstène exprimées par une formule générale WOₓ (satisfaisant 2,45 ≤ x ≤ 2,999) et/ou des nanoparticules d'oxyde de tungstène composites exprimées par une formule générale M_{y}WO_{z} (M est un ou plusieurs types d'éléments choisis parmi Cs, Rb, K, Tl, In, Ba, Li, Ca, Sr, Fe, Sn, Al et Cu ; satisfaisant 0,1 ≤ y ≤ 0,5, 2,2 ≤ z ≤ 3,0) et ayant une structure cristalline hexagonale, et une taille moyenne de particule dispersée des nanoparticules est de 1 nm ou plus et de 200 nm ou moins, une teneur des nanoparticules est de 0,1 % en poids ou plus et de 10 % en poids ou moins, et une épaisseur du film en polyester est de 10 µm ou plus et de 300 µm ou moins, et
**caractérisé en ce qu'**il y a des agents anticoloration dispersés dans le film en polyester de protection contre les rayons thermiques, les agents anticoloration étant un agent anticoloration à base de phosphore contenant un ou plusieurs types de groupes choisis parmi l'un quelconque d'un groupe phosphonate, un groupe phosphate, un groupe ester de phosphonate et un groupe phosphinate.

2. Film en polyester de protection contre les rayons thermiques selon la revendication 1, dans lequel une teneur des agents anticoloration est de 0,1 % en poids ou plus et de 20 % en poids ou moins.

3. Film en polyester de protection contre les rayons thermiques selon la revendication 1 ou 2, dans lequel une transmittance de lumière visible du film en polyester de protection contre les rayons thermiques est fixée à 60 % ou plus et 70 % ou moins, et lorsqu'un taux de réduction de la transmittance de lumière visible est standardisé à 100 % après émission de rayons ultraviolets pendant 2 heures à une intensité de 100 mW/cm² sur un film en polyester de protection contre les rayons thermiques ayant la même composition que la composition du film en polyester de protection contre les rayons thermiques mentionné ci-dessus sauf que l'agent anticoloration n'est pas contenu, le taux de réduction de la transmittance de lumière visible est de 70 % ou moins après émission de rayons ultraviolets sur ce film en polyester de protection contre les rayons thermiques, pendant les mêmes heures, à la même intensité.

4. Stratifié de film en polyester de protection contre les rayons thermiques, qui est obtenu en stratifiant le film en polyester de protection contre les rayons thermiques selon l'une quelconque des revendications 1 à 3 sur un autre matériau de base transparent.

5. Film en polyester de protection contre les rayons thermiques selon l'une quelconque des revendications 1 à 3, dans lequel un revêtement en résine contenant un absorbeur d'ultraviolets est formé sur au moins une surface de film du film en polyester de protection contre les rayons thermiques.

6. Film en polyester de protection contre les rayons thermiques selon l'une quelconque des revendications 1, 2, 3 et 5, dans lequel une couche facilitant l'adhérence et formée en résine soluble dans l'eau ou dispersible dans l'eau est prévue sur une surface du film en polyester de protection contre les rayons thermiques.
